# EUROPÄISCHE PATENTSCHRIFT

(11) **EP 3 849 859 B1**
(45) Veröffentlichungstag und Bekanntmachung des Hinweises auf die Patenterteilung: **09.08.2023**
(21) Anmeldenummer: 19765438.7
(22) Anmeldetag: 04.09.2019
(51) Int. Cl.: B60T 1/087, B60T 10/02, F16D 57/04

(54) **HYDRODYNAMISCHER RETARDER**
HYDRODYNAMIC RETARDER
RETARDATEUR HYDRODYNAMIQUE

(30) Priorität: 13.09.2018 DE 102018122337
(43) Veröffentlichungstag der Anmeldung: 21.07.2021
(73) Patentinhaber: Voith Patent GmbH, 89522 Heidenheim (DE)
(72) Erfinder: GOTH, Benedikt, 91572 Bechhofen (DE); WITTMANN, John Patrick, 91088 Bubenreuth (DE); BLUMENSTOCK, Martin, 74586 Frankenhardt (DE); LAUKEMANN, Dieter, 74580 Frankenhardt (DE)
(74) Vertreter: Voith Patent GmbH - Patentabteilung
(86) Internationale Anmeldenummer: PCT/EP2019/073524
(87) Internationale Veröffentlichungsnummer: WO 2020/053039

(56) Entgegenhaltungen:
- EP-B1- 2 300 696
- DE-A1- 10 237 766
- DE-A1- 19 616 427
- DE-A1-102011 013 548
- DE-A1-102014 202 366
- DE-A1-102016 213 672
- DE-C1- 3 545 660

## Beschreibung

Die vorliegende Erfindung betrifft einen hydrodynamischen Retarder mit einem internen Arbeitsmediumkreislauf in einem Arbeitsraum des Retarders, vorliegen Arbeitsraumarbeitsmediumkreislauf genannt, und einem externen Arbeitsmediumkreislauf, in dem ein Wärmetauscher angeordnet ist, im Einzelnen gemäß dem Oberbegriff von Anspruch 1.

Ein hydrodynamischer Retarder, wie ihn die vorliegende Erfindung betrifft, kann beispielsweise in einem Fahrzeuggetriebe positioniert sein und/oder mit dem Arbeitsmedium des Getriebes, insbesondere Öl, betrieben werden. Wenn die Arbeitsmediumversorgung des Retarders über das Getriebearbeitsmedium erfolgt, so steht demgemäß auch nur der Arbeitsmediumdruck des Getriebes zum Befüllen des Arbeitsraumes des Retarders zur Verfügung.

Ein gattungsgemäßer Retarder wird in EP 2 300 696 B1 offenbart. Dieser hydrodynamische Retarder weist einen externen Arbeitsmediumkreislauf auf, dem Arbeitsmedium über eine Arbeitsmediumzufuhrleitung zugeführt werden kann, um den Arbeitsraum des Retarders zu befüllen. Die Arbeitsmediumzufuhrleitung ist hierfür an ein Retarderschaltventil angeschlossen und kann über dieses wahlweise mit einer Arbeitsmediumdruckleitung (Arbeitsdruckebene) und einer Tankleitung verbunden werden, sodass über die Arbeitsmediumzufuhrleitung auch Arbeitsmedium aus dem externen Arbeitsmediumkreislauf abgeführt werden kann. Die Befüllung und Entleerung des Arbeitsraumes des Retarders erfolgt dabei über eine sogenannte Spaltbefüllung beziehungsweise Spaltentleerung und den externen Arbeitsmediumkreislauf. Hierfür ist der externe Arbeitsmediumkreislauf an einem Arbeitsmediumeinlass und an einem Arbeitsmediumauslass angeschlossen, die jeweils auf einem Torusaußendurchmesser des Arbeitsraumes im Arbeitsraum münden. Aufgrund der Kreislaufströmung des Arbeitsmediums im Arbeitsraum herrscht auf diesem Torusaußendurchmesser ein vergleichsweise hoher Druck.

Aus der DE19 616 427 A1 ist ein Retarder bekannt, bei dem zwischen Arbeitsmediumbehälter und dem hydrodynamischen Zentrums des Retarders eine Verbindungsleitung geschaltet ist, wobei sich in der Verbindungsleitung ein Ventil angeordnet ist.

Um nun ein bestimmtes Bremsmoment, das mit dem hydrodynamischen Retarder erzeugt werden soll, einzustellen, muss dem externen Arbeitsmediumkreislauf Arbeitsmedium zu- oder aus diesem abgeführt werden. Die Regelung dieser Zufuhr und Abfuhr kann beispielsweise durch das genannte Wegeventil mit dem Arbeitsmediumdruckleitungsanschluss und dem Tankleitungsanschluss erfolgen. Da jedoch der externe Arbeitsmediumkreislauf über den Arbeitsmediumeinlass auf dem Torusaußendurchmesser mündet, wird ein relativ großer Druck zum Befüllen des Kreislaufes benötigt. Dieser benötigte Druck kann größer sein als der maximal durch das Getriebearbeitsmedium zur Verfügung gestellte Druck, der durch die Druckversorgung des Getriebes festgelegt wird. Dies hat zur Folge, dass in diesem Fall nur vergleichsweise kleine Bremsmomente mit dem Retarder angesteuert werden können.

Der vorliegenden Erfindung liegt daher die Aufgabe zugrunde, einen gattungsgemäßen hydrodynamischen Retarder derart zu verbessern, dass auch bei kleineren Arbeitsmediumdrücken in der Arbeitsmediumdruckleitung ein ausreichend großes Bremsmoment mit dem hydrodynamischen Retarder erzeugt werden kann.

Die erfindungsgemäße Aufgabe wird durch einen hydrodynamischen Retarder mit den Merkmalen von Anspruch 1 gelöst. In den abhängigen Ansprüchen werden vorteilhafte und besonders zweckmäßige Ausgestaltungen der Erfindung angegeben.

Durch die erfindungsgemäße Lösung werden die verschiedenen unterschiedlichen Druckniveaus innerhalb des hydraulischen Systems im Arbeitsraumarbeitsmediumkreislauf und externen Arbeitsmediumkreislauf genutzt, um die Befüllung und Entleerung des Arbeitsraumes beziehungsweise die Einstellung des optimalen Füllungsgrades zu steuern oder zu regeln. Die Genauigkeit bei der Einstellung des gewünschten Arbeitsraumfüllungsgrades mit Arbeitsmedium kann verbessert werden. Vorteilhaft ist zugleich eine Minimierung des Rückflusses von heißem Arbeitsmedium, das im Arbeitsraum erwärmt wurde, in den Tank, der in der Regel durch den Ölsumpf des Getriebes gebildet wird.

Im Einzelnen weist ein erfindungsgemäßer hydrodynamischer Retarder einen Rotor und einen Stator oder einen Rotor und einen Gegenlaufrotor auf, wobei der Rotor und der Stator beziehungsweise der Rotor und der Gegenlaufrotor gemeinsam einen torusförmigen, mit Arbeitsmedium befüllbaren Arbeitsraum ausbilden, um Drehmoment mittels eines hydrodynamischen Arbeitsraumarbeitsmediumkreislaufes vom Rotor auf den Stator beziehungsweise vom Rotor auf den Gegenlaufrotor zu übertragen und damit den Rotor abzubremsen. Bei dem Arbeitsmedium handelt es sich insbesondere um Öl, beispielsweise Getriebeöl, wenn der hydrodynamische Retarder an einem Fahrzeuggetriebe angeschlossen, aus dessen Ölversorgung versorgt und/oder in dieses Fahrzeuggetriebe integriert ist.

Der hydrodynamische Retarder weist ferner einen externen Arbeitsmediumkreislauf auf, in dem ein Wärmetauscher vorgesehen ist, um Wärme aus dem im Arbeitsraum erwärmten Arbeitsmedium abzuführen. Der externe Arbeitsmediumkreislauf ist über einen Arbeitsmediumeinlass und einen Arbeitsmediumauslass arbeitsmediumleitend am Arbeitsraum des Retarders angeschlossen, wobei der Arbeitsmediumeinlass und der Arbeitsmediumauslass auf einem Torusaußendurchmesser des Arbeitsraumes im Arbeitsraum münden. Das bedeutet, dass die Mündung auf dem Durchmesser der Toruswandung und - in einem Axialschnitt durch den Arbeitsraum gesehen - nicht radial weiter innen innerhalb des Torusquerschnitts positioniert ist. Beispielsweise münden der Arbeitsmediumeinlass und/oder der Arbeitsmediumauslass im Spalt zwischen den beiden sich in Axialrichtung gegenüberstehenden Schaufelrädern, die den Rotor und den Stator beziehungsweise den Rotor und den Gegenlaufrotor ausbilden.

Es ist eine Arbeitsmediumzufuhrleitung vorgesehen, die im externen Arbeitsmediumkreislauf mündet.

Erfindungsgemäß ist ferner eine Kernringbefüllungsleitung arbeitsmediumleitend am Arbeitsraum des Retarders angeschlossen, wobei die Kernringbefüllungsleitung radial innerhalb des Torusaußendurchmessers in einem Kernring des Arbeitsraumes mündet. In einem solchen Kernring herrscht nämlich ein vergleichsweise geringer Druck, sodass auch bei einem begrenzten zur Verfügung stehenden Arbeitsmediumfülldruck der Arbeitsraum vergleichsweise leichter mit Arbeitsmedium befüllt werden kann.

Die erfindungsgemäße Ausgestaltung ermöglicht damit vorteilhaft eine Spaltbefüllung und Spaltentleerung, insbesondere reine Spaltbefüllung und reine Spaltentleerung des Arbeitsraumes, und zusätzlich hierzu, insbesondere in einer anderen Schaltstellung eines Wegeventils, mittels welchem die Arbeitsmediumzufuhrleitung bevorzugt an einer Arbeitsmediumdruckleitung und insbesondere an einer Tankleitung angeschlossen ist, eine Kernringbefüllung mit hiervon getrennter Spaltentleerung.

Bevorzugt erfolgt eine reine Kernringbefüllung gegen ein niedriges Druckniveau im Kernring aus einer Arbeitsmediumdruckleitung, insbesondere eines Getriebes, beispielsweise der Arbeitsdruckebene des Getriebes, wobei die Kernringbefüllungsleitung von Bereichen mit hohem Arbeitsmediumdruck im Arbeitsraum des Retarders und im externen Arbeitsmediumkreislauf getrennt ist. Die Abfuhr des Arbeitsmediums aus dem Arbeitsraum kann dabei über eine Spaltentleerung erfolgen. Damit kann bei der Arbeitsmediumzufuhr in den Arbeitsraum und der Arbeitsmediumabfuhr aus dem Arbeitsraum jeweils die maximal mögliche Druckdifferenz genutzt werden.

Bevorzugt ist die Arbeitsmediumzufuhrleitung mittels eines Wegeventils an einer Arbeitsmediumdruckleitung und insbesondere an einer Tankleitung angeschlossen, wobei besonders vorteilhaft das Wegeventil als Druckwaage ausgeführt ist, dessen Steuerkolben einerseits mit dem Druck des externen Arbeitsmediumkreislaufes, insbesondere im oder hinter dem Arbeitsmediumauslass, und andererseits, in einer entgegengesetzten Richtung, mit einem Ansteuerdruck aus einer Steuerdruckleitung, über den das gewünschte Bremsmoment des hydrodynamischen Retarders vorgegeben wird und der insbesondere proportional zum gewünschten Bremsmoment ist, beaufschlagt wird.

Gemäß einer Ausführungsform der Erfindung zweigt die Kernringbefüllungsleitung aus der Arbeitsmediumzufuhrleitung ab. Besonders in diesem Fall ist es günstig, wenn in Strömungsrichtung des Arbeitsmediums in der Arbeitsmediumzufuhrleitung, bezogen auf eine Befüllung des externen Arbeitsmediumkreislaufes über die Arbeitsmediumzufuhrleitung mit Arbeitsmedium, hinter einer Abzweigstelle der Kernringbefüllungsleitung eine Drossel in der Arbeitsmediumzufuhrleitung vorgesehen ist, um eine vorgegebene Druckdifferenz in der Arbeitsmediumzufuhrleitung zu erzeugen.

Günstig ist ferner, wenn in der Kernringbefüllungsleitung eine Drossel zur Erzeugung einer vorgegebenen Druckdifferenz in der Kernringbefüllungsleitung vorgesehen ist.

Wenn beide Drosseln vorgesehen sind, können diese im Strömungsquerschnitt aufeinander abgestimmt werden, um das gewünschte Ausmaß der Kernringbefüllung zu erreichen.

Die Drossel(n) kann/können als Konstantdrossel oder Verstelldrossel ausgeführt sein.

Insbesondere bei Vorsehen der Abzweigung der Kernringbefüllungsleitung aus der Arbeitsmediumzufuhrleitung kann das Wegeventil als 3/2-Wegeventil ausgeführt sein, beispielsweise in Form der zuvor dargestellten Druckwaage.

Gemäß einer alternativen Ausführungsform ist die Kernringbefüllungsleitung parallel zu und getrennt von der Arbeitsmediumzufuhrleitung vorgesehen. Das bedeutet, dass das durch die Arbeitsmediumzufuhrleitung strömende Arbeitsmedium nicht in die Kernringbefüllungsleitung strömen kann.

Beispielsweise sind die Kernringbefüllungsleitung und die Arbeitsmediumzufuhrleitung an verschiedenen Anschlüssen oder Auslässen des Wegeventils angeschlossen. Besonders in diesem Fall kann das Wegeventil als 4/2-Wegeventil ausgeführt sein.

Gemäß einer bevorzugten Ausgestaltung der Erfindung ist die Arbeitsmediumzufuhrleitung in zwei entgegengesetzte Richtungen vom Arbeitsmedium durchströmbar, um über die Arbeitsmediumzufuhrleitung nicht nur Arbeitsmedium in den externen Arbeitsmediumkreislauf und damit den Arbeitsraum des Retarders zuführen zu können, sondern zu dessen Entleerung auch aus dem externen Arbeitsmediumkreislauf abführen zu können. Die Zufuhr und die Abfuhr können bevorzugt dabei in derselben Schaltstellung des Wegeventils erreicht werden und stellen sich in Abhängigkeit der herrschenden Druckverhältnisse ein, und insbesondere in Abhängigkeit des Ansteuerdruckes in der Steuerdruckleitung, über welchen das Retarderbremsmoment vorgegeben wird. Dabei ist es möglich, dass ein Steuerkolben des Wegeventils innerhalb derselben Schaltstellung um ein gewisses Ausmaß verschoben wird, damit die Steuerkanten die Druckdifferenz über dem Wegeventil einstellen, um das gewünschte Befüllen und Entleeren zu erreichen. Die Einstellung kann dabei beispielsweise durch die genannte Ausbildung des Wegeventils als Druckwaage erreicht werden.

Bevorzugt sind im externen Arbeitsmediumkreislauf in Strömungsrichtung des Arbeitsmediums vor und hinter dem Wärmetauscher Wegeventile vorgesehen, um den Wärmetauscher wahlweise aus dem externen Arbeitsmediumkreislauf auszukoppeln. Beispielsweise ist ein Wegeventil in Strömungsrichtung vor dem Wärmetauscher vorgesehen, das den zugeordneten Anschluss des externen Arbeitsmediumkreislaufes wahlweise mit dem Wärmetauscher und wahlweise mit einer Tankleitung verbindet. In Strömungsrichtung des Arbeitsmediums hinter dem Wärmetauscher kann insbesondere ein Wegeventil vorgesehen sein, das den zugeordneten Anschluss des Wärmetauschers wahlweise mit dem Anschluss des externen Arbeitsmediumkreislaufes und einer Tankleitung verbindet, die zugleich arbeitsmediumleitend mit dem Wegeventil in oder vor der Arbeitsmediumzufuhrleitung verbunden sein kann.

Auch bei einer Teilfüllung des Arbeitsraumes mit Arbeitsmedium, bei der kein Arbeitsmediumvolumen im Kernring vorhanden ist, ist durch den auf den Torusaußendurchmesser mündenden Arbeitsmediumauslass eine Arbeitsmediumabfuhr aus dem Arbeitsraum möglich, sodass auch besonders kleine Bremsmomente eingestellt werden können. Zugleich kann auch bei großen Drehzahlen des Retarders, die mit einem großen Arbeitsmediumdruck im Arbeitsmediumkreislauf einhergehen, durch die Kernringbefüllung eine Vollfüllung erreicht werden.

Die Erfindung soll nachfolgend anhand von Ausführungsbeispielen und den Figuren exemplarisch beschrieben werden.

Es zeigen:
- Figur 1: ein erstes Ausführungsbeispiel der Erfindung;
- Figur 2: eine schematische Darstellung des Arbeitsmediumkreislaufes im Arbeitsraum des Retarders und die Anschlüsse am Arbeitsraum für einen erfindungsgemäßen Retarder;
- Figur 3: ein weiteres Ausführungsbeispiel der Erfindung.

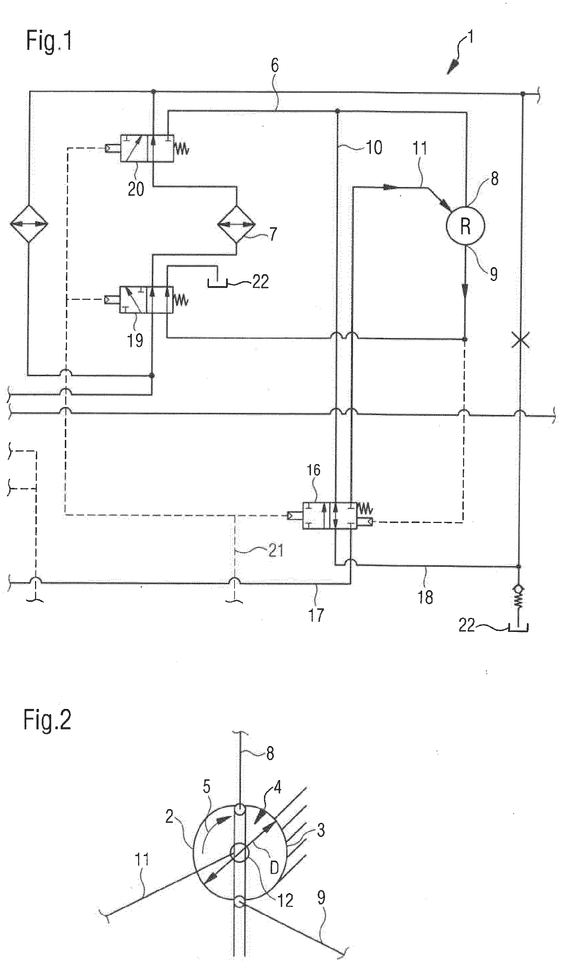

In der Figur 1 ist schematisch ein hydrodynamischer Retarder 1 mit einem externen Arbeitsmediumkreislauf 6 gezeigt. Der externe Arbeitsmediumkreislauf 6 ist über einen Arbeitsmediumeinlass 8 und einen Arbeitsmediumauslass 9 arbeitsmediumleitend an einem Arbeitsraum 4 des Retarders 1 angeschlossen. Details des Anschlusses und der Arbeitsraum 4 sind in der Figur 2 schematisch dargestellt.

So wird der Arbeitsraum 4 durch einen beschaufelten Rotor 2 und einen beschaufelten Stator 3 gebildet. Der Rotor 2 und der Stator 3 stehen sich in Axialrichtung, das heißt in Richtung der Drehachse des Rotors 2, mit einem Axialspalt gegenüber. Durch Drehantreiben des Rotors 2 wird Arbeitsmedium im Arbeitsraum 4 radial nach außen beschleunigt, tritt in den Stator 3 ein, wird dort radial nach innen verzögert und tritt radial innen wieder in den Rotor 2 ein. Damit wird ein hydrodynamischer Arbeitsraumarbeitsmediumkreislauf 5 gebildet.

Der im Querschnitt dargestellte Arbeitsraum 4 ist über dem Umfang der Drehachse des Rotors 2 torusförmig, wobei der Torus einen entsprechenden Torusaußendurchmesser D aufweist. Der Torusaußendurchmesser D bezieht sich dabei auf den Durchmesser des Vollkreises, aus welchem der Torus im mathematischen Sinne durch Rotation um die Drehachse gebildet wird. Zumindest in etwa in der Mitte des Torusaußendurchmessers D beziehungsweise des Arbeitsraumes 4 befindet sich der sogenannte Kernring 12 des Arbeitsraumes 4, der entsprechend durch das Auge des Arbeitsraumarbeitsmediumkreislaufes 5 bestimmt wird. Sowohl der Arbeitsmediumeinlass 8 als auch der Arbeitsmediumauslass 9 münden auf dem Torusaußendurchmesser D des Arbeitsraumes 4 im Arbeitsraum 4.

Zusätzlich mündet im Arbeitsraum 4 die Kernringbefüllungsleitung 11. Diese Kernringbefüllungsleitung 11 mündet im Kernring 12, also an einer Stelle des Arbeitsraumes 4 mit vergleichsweise geringem Arbeitsmediumdruck, insbesondere dem geringsten Arbeitsmediumdruck, wohingegen besonders der Arbeitsmediumauslass 9 an einer Stelle hohen Druckes im Arbeitsraum 4 mündet. Hierzu kann die Mündung des Arbeitsmediumauslasses 9 beispielsweise auch weiter radial außen im Arbeitsraum 4, bezogen auf die Drehachse des Rotors 2, vorgesehen sein. Insbesondere können die hier dargestellten Positionen des Arbeitsmediumeinlasses 8 und des Arbeitsmediumauslasses 9 miteinander getauscht sein. Ferner ist es nicht zwingend notwendig, dass der Arbeitsmediumeinlass 8 und/oder der Arbeitsmediumauslass 9 im gezeigten Spalt zwischen dem Rotor 2 und dem Stator 3 mündet/münden.

In der Figur 1 ist dargestellt, dass die Kernringbefüllungsleitung 11 zusätzlich zu einer Arbeitsmediumzufuhrleitung 10 vorgesehen ist, die insbesondere außerhalb eines Retardergehäuses am externen Arbeitsmediumkreislauf 6 angeschlossen ist. Die Arbeitsmediumzufuhrleitung 10 und die Kernringbefüllungsleitung 11 sind jedoch an Anschlüssen eines gemeinsamen Wegeventils 16 angeschlossen, das als Druckwaage ausgebildet ist. Das Wegeventil 16 weist zwei Schaltstellungen auf und zusätzlich zu den genannten Anschlüssen der Arbeitsmediumzufuhrleitung 10 und der Kernringbefüllungsleitung 11 einen Anschluss für eine Arbeitsmediumdruckleitung 17 und einen Anschluss für eine Tankleitung 18. Das Wegeventil 16 ist somit als 4/2-Wegeventil ausgeführt.

Von den einander entgegengesetzt positionierten und gegeneinander wirkenden Druckanschlüssen des Wegeventils 16 ist einer mit dem externen Arbeitsmediumkreislauf 6 hinter dem Arbeitsmediumauslass 9 verbunden und der andere mit einer Steuerdruckleitung 21, über deren Steuerdruck das gewünschte Bremsmoment des hydrodynamischen Retarders 1 eingestellt wird, verbunden. Die Steuerdruckleitung 21 beaufschlagt ferner ein Wegeventil 19 in Strömungsrichtung des Arbeitsmediums im externen Arbeitsmediumkreislauf 6 vor einem Wärmetauscher 7 und ein Wegeventil 20 in Strömungsrichtung des Arbeitsmediums im externen Arbeitsmediumkreislauf 6 hinter dem Wärmetauscher 7. Damit ist es möglich, den Wärmetauscher 7 wahlweise in den und aus dem externen Arbeitsmediumkreislauf 6 zu schalten, um den Wärmetauscher 7 zum Kühlen des Arbeitsmediums aus dem Retarder 1 oder für andere Kühlzwecke zu verwenden. In der Figur 1 ist dabei der herausgeschaltete Zustand des Wärmetauschers 7 gezeigt, bei welchem der externe Arbeitsmediumkreislauf 6 ausgangsseitig des Wegeventils 19 mit dem Tank 22 verbunden ist und das Wegeventil 20 den Wärmetauscher 7 mit der Tankleitung 18 verbindet.

Wie durch den Doppelpfeil angedeutet ist, kann die Arbeitsmediumzufuhrleitung 10 in beide Richtungen vom Arbeitsmedium durchströmt werden, entweder um Arbeitsmedium dem externen Arbeitsmediumkreislauf 6 zuzuführen oder aus diesem abzuführen.

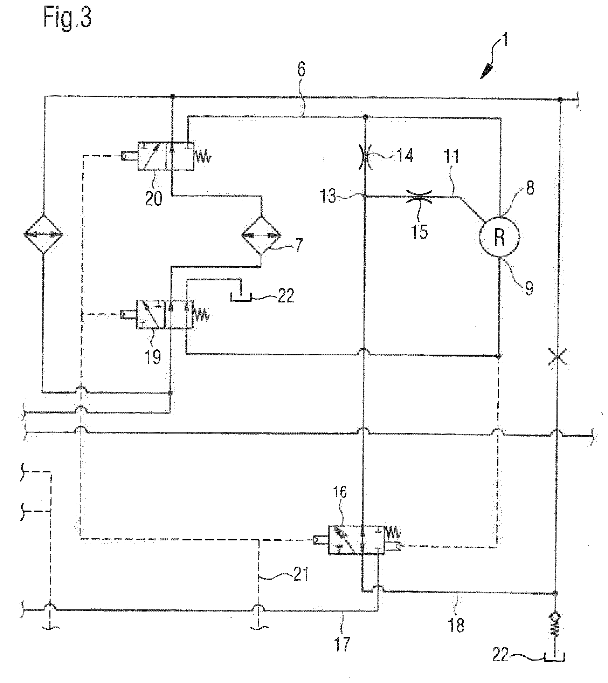

Bei der Ausgestaltung gemäß der Figur 3 ist der Anschluss der Kernringbefüllungsleitung 11 verschieden zum Ausführungsbeispiel gemäß der Figur 1 ausgeführt. Im Übrigen wird auf die Darstellung zu den Figuren 1 und 2 verwiesen, wobei dieselben Bezugszeichen für die sich entsprechenden Bauteile verwendet werden.

Beim Ausführungsbeispiel gemäß der Figur 3 zweigt die Kernringbefüllungsleitung 11 aus der Arbeitsmediumzufuhrleitung 10 ab. Um die geeigneten Druckverhältnisse herzustellen, sind die Drosseln 14 und 15 vorgesehen, die Drossel 14 in der Arbeitsmediumzufuhrleitung 10 hinter der Abzweigstelle der Kernringbefüllungsleitung 11 und die Drossel 15 in der Kernringbefüllungsleitung 11.

Das Wegeventil 16 kann damit als 3/2-Wegeventil ausgeführt sein, entsprechend mit nur drei Anschlüssen, da die separate Verbindung der Arbeitsmediumdruckleitung 17 mit der Kernringbefüllungsleitung 11, wie in der Figur 1 gezeigt, entfallen kann.

Die Abzweigstelle der Kernringbefüllungsleitung 11 von der Arbeitsmediumzufuhrleitung 10 ist mit 13 bezeichnet.

### Bezugszeichenliste

- 1: Retarder
- 2: Rotor
- 3: Stator
- 4: Arbeitsraum
- 5: Arbeitsraumarbeitsmediumkreislauf
- 6: externer Arbeitsmediumkreislauf
- 7: Wärmetauscher
- 8: Arbeitsmediumeinlass
- 9: Arbeitsmediumauslass
- 10: Arbeitsmediumzufuhrleitung
- 11: Kernringbefüllungsleitung
- 12: Kernring
- 13: Abzweigstelle
- 14: Drossel
- 15: Drossel
- 16: Wegeventil
- 17: Arbeitsmediumdruckleitung
- 18: Tankleitung
- 19: Wegeventil
- 20: Wegeventil
- 21: Steuerdruckleitung
- 22: Tank
- D: Torusaußendurchmesser

## Patentansprüche

1. Hydrodynamischer Retarder (1) mit einem Rotor (2) und einem Stator (3) oder mit einem Rotor (2) und einem Gegenlaufrotor (3), die gemeinsam einen torusförmigen, mit Arbeitsmedium befüllbaren Arbeitsraum (4) ausbilden, um Drehmoment mittels eines hydrodynamischen Arbeitsraumarbeitsmediumkreislaufes (5) zu übertragen;
mit einem externen Arbeitsmediumkreislauf (6), in dem ein Wärmetauscher (7) zur Abfuhr von Wärme aus dem Arbeitsmedium vorgesehen ist, wobei der externe Arbeitsmediumkreislauf (6) über einen Arbeitsmediumeinlass (8) und einen Arbeitsmediumauslass (9) arbeitsmediumleitend am Arbeitsraum (4) angeschlossen sind und der Arbeitsmediumeinlass (8) sowie der Arbeitsmediumauslass (9) auf einem Torusaußendurchmesser (D) des Arbeitsraumes (4) im Arbeitsraum (4) münden;
mit einer Arbeitsmediumzufuhrleitung (10), die im externen Arbeitsmediumkreislauf (6) mündet;
**dadurch gekennzeichnet, dass**
eine Kernringbefüllungsleitung (11) arbeitsmediumleitend am Arbeitsraum (4) angeschlossen ist, die radial innerhalb des Torusaußendurchmessers (D) in einem Kernring (12) des Arbeitsraumes (4) mündet, wobei die Arbeitsmediumzufuhrleitung (10) mittels eines Wegeventils (16) an einer Arbeitsmediumdruckleitung (17) und insbesondere an einer Tankleitung (18) angeschlossen ist.

2. Hydrodynamischer Retarder (1) gemäß Anspruch 1, **dadurch gekennzeichnet, dass** die Kernringbefüllungsleitung (11) aus der Arbeitsmediumzufuhrleitung (10) abzweigt.

3. Hydrodynamischer Retarder (2) gemäß Anspruch 2, **dadurch gekennzeichnet, dass** in Strömungsrichtung des Arbeitsmediums über die Arbeitsmediumzufuhrleitung (10) in den Arbeitsraum (4) hinter einer Abzweigstelle (13) der Kernringbefüllungsleitung (11) eine Drossel (14) zur Erzeugung einer vorgegebenen Druckdifferenz in der Arbeitsmediumzufuhrleitung (10) vorgesehen ist.

4. Hydrodynamischer Retarder (1) gemäß Anspruch 3, **dadurch gekennzeichnet, dass** in der Kernringbefüllungsleitung (11) eine Drossel (15) zur Erzeugung einer vorgegebenen Druckdifferenz vorgesehen ist.

5. Hydrodynamischer Retarder (1) gemäß einem der Ansprüche 2 bis 4, **dadurch gekennzeichnet, dass** das Wegeventil (16) als 3/2-Wegeventil ausgeführt ist.

6. Hydrodynamischer Retarder (1) gemäß Anspruch 1, **dadurch gekennzeichnet, dass** die Kernringbefüllungsleitung (11) parallel zu und getrennt von der Arbeitsmediumzufuhrleitung (10) vorgesehen ist.

7. Hydrodynamischer Retarder (1) gemäß den Ansprüchen 1 und 6, **dadurch gekennzeichnet, dass** die Kernringbefüllungsleitung (11) und die Arbeitsmediumzufuhrleitung (10) an verschiedenen Auslässen des Wegeventils (16) angeschlossen sind.

8. Hydrodynamischer Retarder (1) gemäß Anspruch 7, **dadurch gekennzeichnet, dass** das Wegeventil (16) als 4/2-Wegeventil ausgeführt ist.

9. Hydrodynamischer Retarder (1) gemäß einem der Ansprüche 1 bis 8, **dadurch gekennzeichnet, dass** die Arbeitsmediumzufuhrleitung (10) in zwei entgegengesetzte Richtungen vom Arbeitsmedium durchströmbar ist, um wahlweise Arbeitsmedium in den externen Arbeitsmediumkreislauf (6) einzuleiten und aus diesem abzuführen.

10. Hydrodynamischer Retarder (1) gemäß einem der Ansprüche 1 bis 9, **dadurch gekennzeichnet, dass** im externen Arbeitsmediumkreislauf (6) in Strömungsrichtung des Arbeitsmediums vor und hinter dem Wärmetauscher (7) jeweils wenigstens ein Wegeventil (19, 20) vorgesehen ist, um den Wärmetauscher (7) aus dem externen Arbeitsmediumkreislauf (6) auszukoppeln.

## Claims

1. Hydrodynamic retarder (1) having a rotor (2) and a stator (3), or having a rotor (2) and a counter-rotor (3), which together form a toroidal working chamber (4), which is fillable with working medium, in order for torque to be transmitted by means of a hydrodynamic working-chamber working-medium circuit (5) ;
having an external working-medium circuit (6) in which provision is made of a heat exchanger (7) for removal of heat from the working medium, wherein the external working-medium circuit (6) is connected in a working-medium-conducting manner to the working chamber (4) via a working-medium inlet (8) and a working-medium outlet (9), and the working medium inlet (8) and the working-medium outlet (9) open out into the working chamber (4) at a torus outer diameter (D) of the working chamber (4);
having a working-medium feed line (10) which opens out into the external working-medium circuit (6);
**characterized in that**
a core-ring-filling line (11) is connected in a working-medium-conducting manner to the working chamber (4) and opens out into a core ring (12) of the working chamber (4) radially inside the torus outer diameter (D), wherein the working-medium feed line (10) is connected to a working-medium pressure line (17), and in particular to a tank line (18), by means of a directional valve (16).

2. Hydrodynamic retarder (1) according to Claim 1, **characterized in that** the core-ring-filling line (11) branches off from the working-medium feed line (10) .

3. Hydrodynamic retarder (2) according to Claim 2, **characterized in that**, behind a branch point (13) of the core-ring-filling line (11) in the flow direction of the working medium into the working chamber (4) via the working-medium feed line (10), provision is made of a throttle (14) for generating a predefined pressure difference in the working-medium feed line (10).

4. Hydrodynamic retarder (1) according to Claim 3, **characterized in that**, in the core-ring-filling line (11), provision is made of a throttle (15) for generating a predefined pressure difference.

5. Hydrodynamic retarder (1) according to one of Claims 2 to 4, **characterized in that** the directional valve (16) is in the form of a 3/2-way valve.

6. Hydrodynamic retarder (1) according to Claim 1, **characterized in that** the core-ring-filling line (11) is provided parallel to and separate from the working-medium feed line (10).

7. Hydrodynamic retarder (1) according to Claims 1 and 6, **characterized in that** the core-ring-filling line (11) and the working-medium feed line (10) are connected to different outlets of the directional valve (16).

8. Hydrodynamic retarder (1) according to Claim 7, **characterized in that** the directional valve (16) is in the form of a 4/2-way valve.

9. Hydrodynamic retarder (1) according to one of Claims 1 to 8, **characterized in that** the working-medium feed line (10) is able to be flowed through by the working medium in two opposite directions in order for working medium to be selectively introduced into the external working-medium circuit (6) and removed therefrom.

10. Hydrodynamic retarder (1) according to one of Claims 1 to 9, **characterized in that**, in the external working-medium circuit (6), provision is made in front of and behind the heat exchanger (7) in the flow direction of the working medium of in each case at least one directional valve (19, 20) in order for the heat exchanger (7) to be uncoupled from the external working-medium circuit (6) .

## Revendications

1. Retardateur hydrodynamique (1) comportant un rotor (2) et un stator (3) ou comportant un rotor (2) et un rotor contrarotatif (3), qui forment ensemble un espace de travail (4) toroïdal pouvant être rempli de fluide de travail, afin de transmettre un couple au moyen d'un circuit de fluide de travail d'espace de travail (5) hydrodynamique ;
comportant un circuit de fluide de travail (6) externe, dans lequel un échangeur de chaleur (7) servant à la dissipation de chaleur hors du fluide de travail est prévu, le circuit de fluide de travail (6) externe étant raccordé à l'espace de travail (4) de manière à conduire le fluide de travail par le biais d'une entrée de fluide de travail (8) et d'une sortie de fluide de travail (9) et l'entrée de fluide de travail (8) ainsi que la sortie de fluide de travail (9) débouchant dans l'espace de travail (4) sur un diamètre extérieur de tore (D) de l'espace de travail (4) ;
comportant une conduite d'amenée de fluide de travail (10), qui débouche dans le circuit de fluide de travail (6) externe ;
**caractérisé en ce**
**qu'**une conduite de remplissage d'anneau central (11) est raccordée à l'espace de travail (4) de manière à conduire le fluide de travail, laquelle conduite débouche dans un anneau central (12) de l'espace de travail (4) radialement à l'intérieur du diamètre extérieur de tore (D), la conduite d'amenée de fluide de travail (10) étant raccordée au moyen d'un distributeur (16) à une conduite sous pression de fluide de travail (17) et en particulier à une conduite de réservoir (18).

2. Retardateur hydrodynamique (1) selon la revendication 1, **caractérisé en ce que** la conduite remplissage d'anneau central (11) bifurque à partir de la conduite d'amenée de fluide de travail (10).

3. Retardateur hydrodynamique (2) selon la revendication 2, **caractérisé en ce qu'**un étranglement (14) servant à produire une différence de pression prédéfinie dans la conduite d'amenée de fluide de travail (10) est prévu dans l'espace de travail (4) en aval d'un point de bifurcation (13) de la conduite de remplissage d'anneau central (11) dans le sens d'écoulement du fluide de travail via la conduite d'amenée de fluide de travail (10) .

4. Retardateur hydrodynamique (1) selon la revendication 3, **caractérisé en ce qu'**un étranglement (15) servant à produire une différence de pression prédéfinie est prévu dans la conduite de remplissage d'anneau central (11).

5. Retardateur hydrodynamique (1) selon l'une des revendications 2 à 4, **caractérisé en ce que** le distributeur (16) est réalisé sous forme de distributeur à 3/2 voies.

6. Retardateur hydrodynamique (1) selon la revendication 1, **caractérisé en ce que** la conduite de remplissage d'anneau central (11) est prévue parallèlement à la conduite d'amenée de fluide de travail (10) et séparément de celle-ci.

7. Retardateur hydrodynamique (1) selon l'une des revendications 1 et 6, **caractérisé en ce que** la conduite remplissage d'anneau central (11) et la conduite d'amenée de fluide de travail (10) sont raccordées à différentes sorties du distributeur (16).

8. Retardateur hydrodynamique (1) selon la revendication 7, **caractérisé en ce que** le distributeur (16) est réalisé sous forme de distributeur à 4/2 voies.

9. Retardateur hydrodynamique (1) selon l'une des revendications 1 à 8, **caractérisé en ce que** la conduite d'amenée de fluide de travail (10) peut être traversée par le fluide de travail dans deux sens opposés, afin de sélectivement introduire du fluide de travail dans le circuit de fluide de travail (6) externe et l'en évacuer.

10. Retardateur hydrodynamique (1) selon l'une des revendications 1 à 9, **caractérisé en ce que** respectivement au moins un distributeur (19, 20) est prévu dans le circuit de fluide de travail (6) externe en amont et en aval de l'échangeur de chaleur (7) dans le sens d'écoulement du fluide de travail, afin de désaccoupler l'échangeur de chaleur (7) du circuit de fluide de travail (6) externe.
